# EUROPEAN PATENT APPLICATION

(11) **EP 1 291 104 A1**
(43) Date of publication of application: **12.03.2003**
(21) Application number: 02090063.5
(22) Date of filing: 20.02.2002
(51) Int. Cl.: B23B 41/02

(54) **System and method for boring a workpiece**

(30) Priority: 05.09.2001 US 946402
(71) Applicant: Sugino Corp., Schaumburg, Illinois 60173 (US)
(72) Inventor: Wolfe, Jon A., St. Charles, Illinois 60175 (US)
(74) Representative: Wablat, Wolfgang, Dr.Dr.

(57) **Abstract**

A system for boring a workpiece (86). The system has a spindle assembly (78) for holding and rotating an elongate tool (80) around a first axis (82) to effect boring of a workpiece (86). The spindle assembly (78) has a spindle (124) that is movable from a retracted position along a first axis (82) to an extended position through an operating range. The spindle assembly (78) further has a guide assembly (134) relative to which the spindle (80) is guidingly rotatable. The system further includes a chip box (90) having a housing (92) defining a collection space (94) and having first and second walls (111,112) spaced axially relative to the first axis. The guide assembly (134) and chip box (90) are relatively movable along the first axis between first and second different relative positions, with the guide assembly and chip box being closer with respect to each other in the second relative position than in the first relative position. The guide assembly (114) guides rotating movement of the spindle (124) relative to the chip box (90) with the guide assembly (134) and chip box (90) in the second relative position.

## Description

### BACKGROUND OF THE INVENTION

### FIELD OF THE INVENTION

This invention relates to systems for boring workpieces and, more particularly, to a system wherein an elongate tool used to perform the boring operation is directed through a chip box in which lubricant and removed workpiece parts can be collected, as to be delivered to a predetermined location.

### BACKGROUND ART

Boring systems have been available in a wide range of designs. One particular boring system has been designed forforming bores in workpieces, which bores have a substantially greater depth in relationship to their diameter. One process using this type of system is that referred to in the industry as "gundrilling". Gundrilling is used in a wide range of industries. The gundrilling process may produce bores with depths 100 times, or more, the diameter of the drilling tool. In some of these operations, the diameter of the boring tool may be relatively small. As a result, the drilling tool is prone to bending, and in a worst case, failure. To accommodate the tendency of the long drilling tool to flex, various systems have been devised.

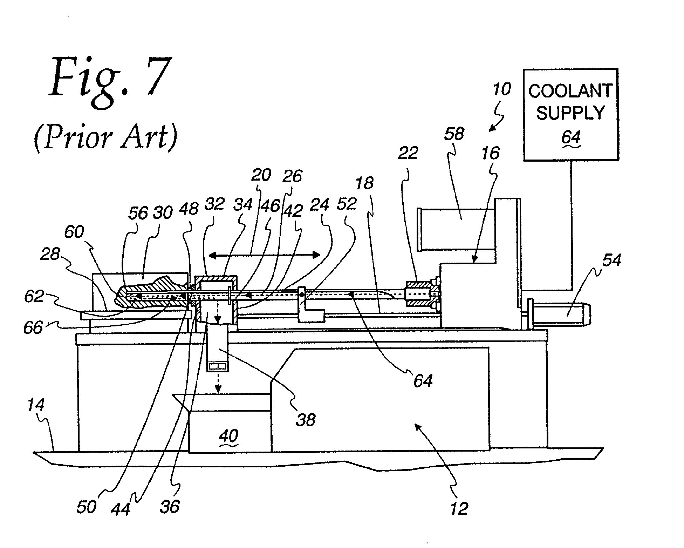

Referring initially to Fig. 7 herein, one conventional gundrilling system is shown at 10. The gundrilling system 10 consists of a frame 12 which is mounted upon a subjacent support surface 14. Atop the frame 12, a spindle assembly 16 is mounted. The spindle assembly 16 is mounted on guideways 18 for controlled, guided movement along the length of the guideways 18, as indicated by the double-headed arrow 20. The spindle assembly 16 includes a spindle 22 which releasably mounts an elongate boring tool 24 for rotation about an axis 26 that is parallel to the line of movement of the spindle assembly 16 along the guideways 18.

The frame 12 defines a support surface 28 upon which an active workpiece 30 is supported. The workpiece 30 is supported downstream of a chip box 32. The chip box 32 consists of a housing 34 defining a collection space 36 for lubricant and workpiece parts removed during a machining process. The collected coolant and workpiece parts are directed by a discharge chute 38, communicating with the collection space 36, to an appropriate location, such as into a receptacle 40.

The housing 34 has spaced upstream and downstream walls 42, 44, which bound the collection space 36, and through which the boring tool 24 extends. An opening 46 in the wall 42 closely receives the boring tool 24. An appropriate seal is established at the opening 46. A bushing 48 is mounted in an opening 50 in the downstream wall 44 and guides rotation of the boring tool 24 relative to the chip box 32.

A guide assembly 52 is mounted on the guideways 18, between the chip box 32 and spindle 22, to reinforce the boring tool 24, so as to control bending thereof along the otherwise unsupported length of the boring tool 24.

To initiate a processing operation, the spindle assembly 16 is positioned relative to the frame 12 along the line 20 by a motor 54 to a point that the leading, free end 56 of the boring tool 24 does not project downstream outwardly from the bushing 48. The workpiece 30, on which a boring process is to be performed, is placed on the surface 28 in an active position. By then operating the motor 54, the boring tool 24 held by the spindle 22, which is rotated by a motor 58, is advanced from right to left and into the workpiece 30.

The boring tool 24 is shown to have coaxial chambers 60, 62. Coolant from a supply 64 is delivered in a downstream direction, as indicated by the arrows 64, through the central chamber 62 to the leading free end 56 of the boring tool 24. The coolant, with entrained chips removed by the boring tool 24 during a machining process, is then returned through the annular chamber 60, extending around the chamber 62, in an upstream direction, as indicated by the arrow 66. Returning coolant and chips are delivered to the collection space 36 and exhausted from the discharge chute 38 to the receptacle 40. Recirculation of the coolant, after filtering, can then be effected.

The system 10 has a number of inherent drawbacks. First of all, the boring tool 24 is exposed over a substantial length thereof between the chip box 32 and spindle 22. In the event that the boring tool 24 fails, pieces thereof could be propelled dangerously towards someone in the vicinity of the system 10. This is particularly dangerous in that the boring tool 24 is typically operated in the range of 4,000-20,000 rpm. Additionally, any lubricant and chips that may migrate upstream from the chip box 32 may likewise be propelled to the surrounding area or against an operator. Aside from the potential danger associated with this, inconvenient periodic cleanup may be required in the vicinity of the system 10.

Additionally, a system such as that shown in Fig. 7 may have some limitations in terms of installation and removal of the boring tool 24. With the system in the configuration shown, the boring tool 24 may have to be guided through the housing openings 46, 50 to and from the spindle 22. The area above the support surface 28 must be free of workpieces to allow access to the openings 46, 50 to carry out this step. The boring tool 24 may have to be carefully aligned with, and directed through, the openings 46, 50. This may be a relatively awkward and time consuming operation.

Alternatively, the overall length of the system must be such as to allow the spindle assembly 16 to be moved upstream sufficiently to allow the boring tool 24 to be fully withdrawn from the housing 34. As a result, the system 10 may have a very substantial overall length.

### SUMMARY OF THE INVENTION

In one form, the invention is directed to a system for boring a workpiece. The system has a spindle assembly for holding and rotating an elongate tool around a first axis to effect boring of a workpiece. The spindle assembly has a spindle that is movable from a retracted position along a first axis to an extended position through an operating range. The spindle assembly further has a guide assembly relative to which the spindle is guidingly rotatable. The system further includes a chip box having a housing defining a collection space and having first and second walls spaced axially relative to the first axis. The guide assembly and chip box are relatively movable along the first axis between first and second different relative positions, with the guide assembly and chip box being closer with respect to each other in the second relative position than in the first relative position. The guide assembly guides rotating movement of the spindle relative to the chip box with the guide assembly and chip box in the second relative position.

The guide assembly may guide rotating movement of the spindle independently of the chip box.

In one form, with the guide assembly and chip box in the second relative position, the guide assembly engages the chip box.

The guide assembly may have a cylindrical sleeve which extends around the first axis and telescopingly engages the chip box.

In one form, the guide assembly and chip box are relatively movable along a first axis and into a third relative position wherein the guide assembly extends at least partially through the chip box.

In one form, the chip box has a cylindrical sleeve which is mounted at the first housing wall and which guides translatory movement of the guide assembly along the first axis.

The chip box may further have a bushing at the second housing wall which is capable of guiding rotating movement of an elongate tool rotated by the spindle and directed through the second housing wall.

In one form, the housing has a first part and a second part that is selectively repositionable relative to the first part between an operating position and an access position.

The second part may be guidingly pivotably movable between the operating and access positions.

The system has an axially downstream end at the second housing wall and an axially upstream end. In one form, with the guide assembly and chip box in the second relative position, there is no rotating part of the spindle assembly or an elongate tool held by the spindle that is exposed upstream of the second housing wall.

The system may further include an elongate tool that is held by the spindle assembly.

In one form, the elongate tool has a cutting portion with a diameter and a length and the ratio of the length of the cutting portion to the diameter of the cutting portion is at least 30:1.

In one form, a part of the spindle projects axially beyond the guide assembly and with the guide assembly and chip box in the first relative position, the part of the spindle can be accessed to selectively secure an elongate tool to the spindle and release an elongate tool from the spindle.

The invention is also directed to a method of boring a workpiece, which include the steps of: rotating a spindle so that an elongate tool held by the spindle is rotated around a first axis; directing the elongate tool held by the spindle in a first direction along the first axis so that the free end of the elongate tool is directed through a housing on a chip box that defines a collection space and against the workpiece; boring a workpiece with the free end of the elongate tool at the downstream end of the housing; shielding the elongate tool from exposure to a user with the housing; and shielding at least a portion of the spindle from exposure to a user upstream of the housing.

The step of shielding at least a portion of the spindle may involve shielding at least a portion of the spindle through a guide assembly that engages the housing.

The method may further include the step of guidingly moving the guide assembly relative to the housing.

The guide assembly may be moved relative to the housing to a tool change position wherein a part of the spindle is exposed. Through the part of the spindle, an elongate tool can be mounted in an operative position on the spindle or released from the operative position.

In one form, the step of mounting or releasing the elongate tool involves directing the elongate tool to and from the part of the spindle by movement of the elongate tool through a collection space defined by the housing in a direction transverse to the first axis.

In one form, the housing has a first part and a second part that is selectively movable relative to the first part to expose the collection space to facilitate direction of the elongate tool to and from the part of the spindle.

The method may further include the step of forming a bore in a workpiece, which bore has a diameter, and a depth that is at least 30 times the diameter of the bore.

### BRIEF DESCRIPTION OF THE DRAWINGS

Fig. 1 is a perspective view of a system for boring a workpiece, according to the present invention, and with a chip box having a movable cover part that is pivoted to an access position and with a spindle carrying a boring tool in a fully extended position;
Fig. 2 is a cross-sectional, side elevation view of the workpiece boring system of Fig. 1, with the spindle retracted to facilitate mounting and removal of the boring tool and the movable cover part in the access position;
Fig. 3 is a plan view of the workpiece boring system in the Fig. 2 state;
Fig. 4 is a view as in Fig. 2 with the cover resituated to an operating position and the spindle moved to a position to start workpiece processing;
Fig. 5 is a view as in Fig. 4 with the spindle extended to the Fig. 1 position wherein a bore is formed in a workpiece;
Fig. 6 is a plan view of the workpiece boring system in the Fig. 5 state; and
Fig. 7 is a side elevation view of a conventional system for boring a workpiece.

### DETAILED DESCRIPTION OF THE DRAWINGS

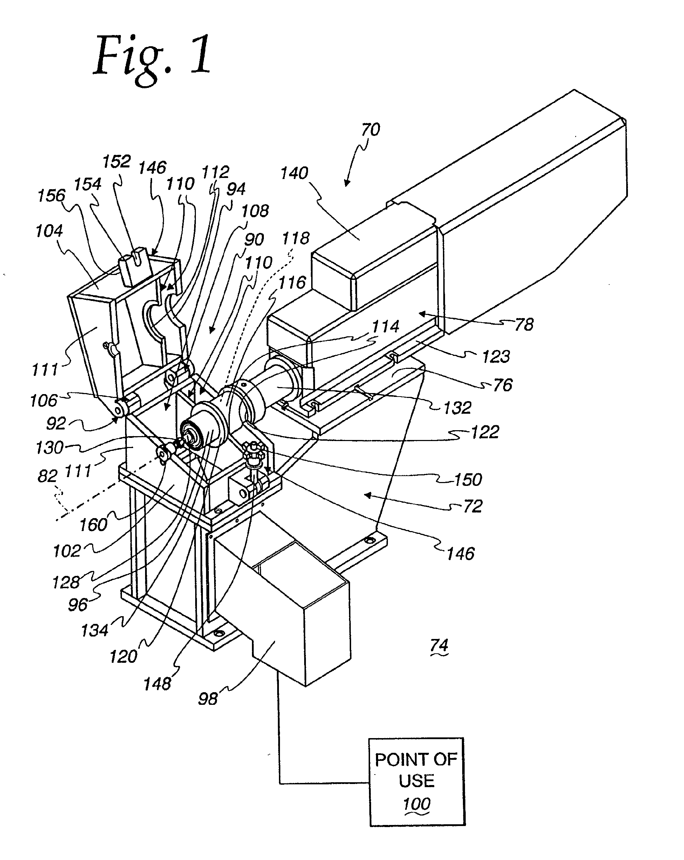

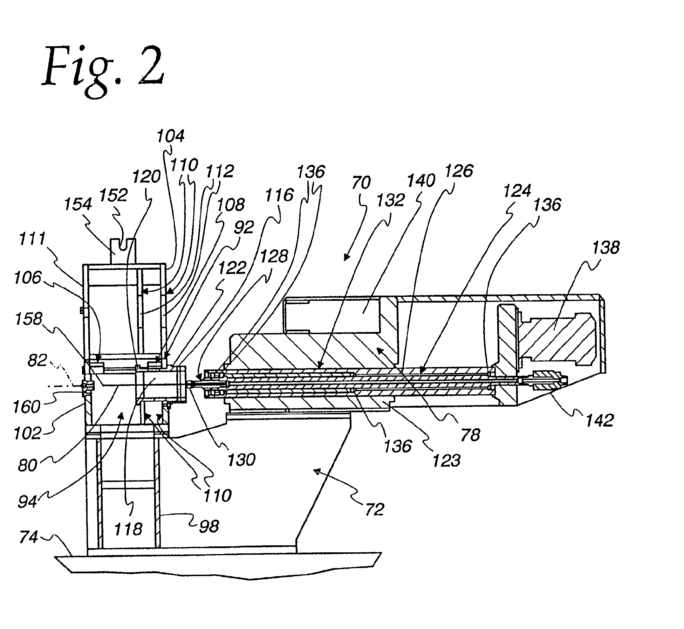

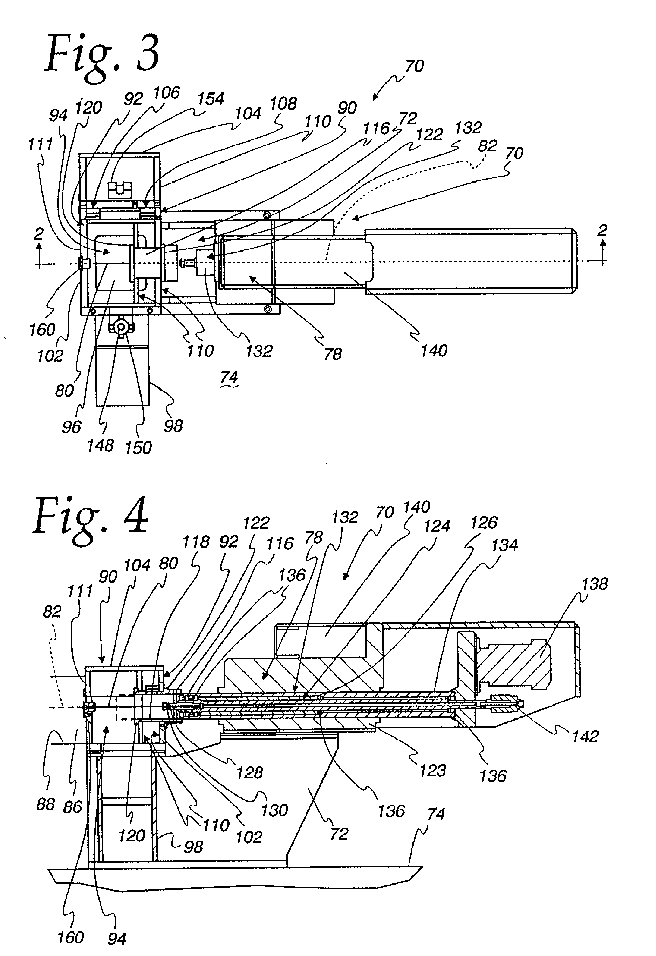

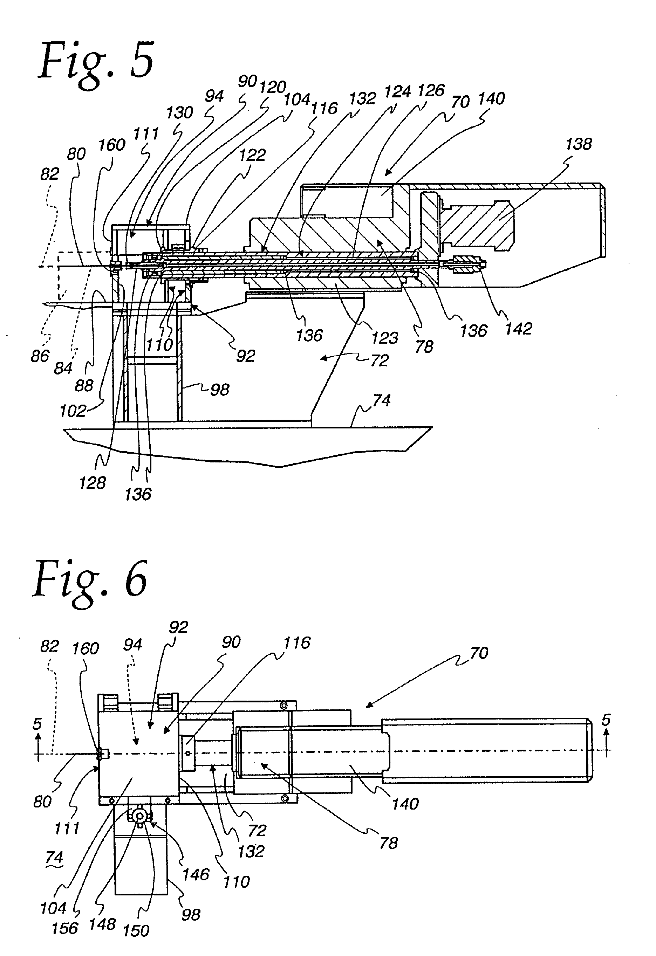

A system for boring a workpiece, according to the present invention, is shown at 70 in Figs. 1-6. The workpiece boring system 70 consists of a frame 72, which is mounted upon a suitable support surface 74. The frame 72 defines a first support surface 76 upon which a spindle assembly 78 is mounted. The spindle assembly 78 is responsible for rotating an elongate boring tool 80 about an axis 82 and for selectively reciprocatingly moving the elongate boring tool 80 along the line of the axis 82 in a range between a fully retracted position, as shown in Figs. 2 and 3, and a fully extended position, as shown in Figs. 1, 5 and 6. As the elongate boring tool 80 is extended to the position shown in Figs. 1, 5 and 6, it forms a bore 84 in a workpiece 86 (Figs. 4 and 5) situated in an operative position on a support surface 88, which may be a part of the frame 72 or separate therefrom.

The workpiece boring system 70 further includes a chip box 90 through which the elongate boring tool 80 held by the spindle 78 is advanced as the elongate boring tool 80 is directed into the workpiece 86. The chip box 90 consists of a housing 92 which defines an accumulation space 94 for machining lubricant and chips and any other particulate removed from workpieces 86 during a boring operation.

At the bottom of the accumulation space 94 is an inclined surface 96 which directs lubricant and/or chips in the accumulation space 94 towards a chute 98, which in turn directs the accumulated lubricant and/or chips to an appropriate point of use 100 (Fig. 1). The point of use 100 may be a container or an accumulation space from where lubricant is filtered and redirected back into the workpiece boring system, as hereinafter described.

The housing 92 consists of a first part 102, which is secured to the frame 72, and a second, cover part 104 connected to the first cover part 102 at hinges 106, 108 for pivoting movement between an access position, as shown in Figs. 1-3, and an operating position, shown in Figs. 4-6. With the second cover part 104 in the operating position, the first and second cover parts 102, 104 cooperatively define a two-piece upstream wall 110 and a downstream wall 111, which are axially spaced and bound the accumulation space 94.

The second cover part 104 has two curved seats 112 formed therein which, in conjunction with curved seats 114 formed in the first part 102, cooperatively define a receptacle for a guide sleeve 116 which is captively maintained between these seats 112, 114 with the second cover part 104 in the operating position. The guide sleeve 116 has a through bore 118 of uniform cross section and annular flanges 120, 122 projecting outwardly therefrom and spaced axially so as to closely receive the wall 110 therebetween to maintain the relative axial positions of the guide sleeve 116 and housing 92.

The spindle assembly 78 has a housing 123 which is supported on the frame 72. The assignee herein currently offers commercially a series of drilling units, one of which is depicted as the spindle assembly 78, that can be incorporated into the workpiece boring system 70. The unit, depicted in Figures 1-6, is one of the assignee's "MSX series" of "CNC self feeders".

Briefly, the spindle assembly 78 consists of a spindle 124 having an elongate shaft 126, at the distal end of which is a tool mounting portion 128 with a releasable collet 130. The collet 130 can be released and tightened using a wrench to thereby selectively allow securing and releasing of the boring tool 80. The collet 130 is rotatable with the shaft 126 around the axis 82. The spindle assembly 78 further includes a guide assembly 132 commonly called a "quill", within which the spindle 124 is journalled for rotation. The quill/guide assembly 132 is in the form of a cylindrical sleeve having a substantially uniform diameter that is slightly less than the diameter of the bore 118 through the housing guide sleeve 116 so that the quill/guide assembly 132 can be translated guidingly within the housing guide sleeve 116 parallel to the axis 82. A series of bearings 136, interposed between the spindle shaft 126 and guide assembly sleeve 134, facilitate free rotation of the spindle shaft 126 about the axis 82. The spindle 124 is driven in rotation by a motor 138. A separate feed motor 140 operates a ball screw to selectively move the quill/guide assembly 132 back and forth along the axis 82. The spindle 124 additionally contains a rotary coolant inducer 142 used to introduce high pressure coolant at 300-2000 psi to the spindle assembly 78 and the elongate boring tool 80.

Operation of the workpiece boring system 70 is as follows. The feed motor 140 is operated to retract the spindle 124 and quill/guide assembly 132 to the position shown in Figs. 2 and 3. This exposes the collet 130 so that the collet 130 can be released, as through a wrench, to allow mounting of the boring tool 80. By placing the second housing cover part 104 in the access position of Figs. 1-3, the operator can direct the boring tool 80 into the accumulation space 94 and thereafter through the guide sleeve through bore 118 into the collet 130, after which the collet 130 can be adjusted to releasably hold the boring tool 80. The cover part 104 is then closed and placed in the operative position, after which a lock assembly 146 is repositioned to maintain the second cover part 104 in the operative position.

The lock assembly consists of a pivoting bolt 148 with a locking nut 150 threaded thereon. The bolt 148 can be pivoted upwardly to move into a receptacle 152 on a latch element 154. So situated, the locking nut 150 overlies an upwardly facing surface 156 on the latch element 154. By then tightening the locking nut 150, the cover part 104 is drawn positively downwardly through the latch element 154. The fully closed cover part 104 positively holds the guide sleeve 116 in place.

By operating the motors 138, 140, the spindle 124 is rotated about the axis 82 and the spindle 124 and quill/guide assembly 132 are advanced downstream towards the workpiece 86 in the operative position on the support surface 88. Initially the boring tool 80 passes through the through bore 118 of the guide sleeve 116. Preferably, the sleeve 134 on the guide assembly 132 enters the through bore 118 of the guide sleeve 116 before the free end 158 (Fig. 2) of the boring tool 80 passes fully through the housing wall 111. Accordingly, the entire spindle 124, upstream of the guide sleeve 116, is surrounded and shielded by the guide assembly sleeve 134. Actually, only a portion of the spindle shaft 126 is exposed through the housing 122. However, it is desirable that at least that portion be at all times be shielded by the sleeve 134 on the guide assembly 132, so that no rotating spindle part is exposed to a user.

Continued advancement of the spindle assembly 124 and quill/guide assembly 132 causes the boring tool 80 to extend to and through a guide bushing 160 mounted on the housing wall 111. Advancement of the spindle assembly 124 and quill/guide assembly 132 continues until the desired bore depth is achieved. As this processing is carried out, lubricant and machine chips may migrate into the accumulation space 94 to be controllably discharged therefrom.

At the completion of the workpiece processing, the motor 140 is operated to retract the spindle 124 and quill/guide assembly 132 either sufficiently to remove the processed workpiece 86, or further to the tool change position in Figs. 2 and 3. The housing cover part 104 can then be placed in the access position to facilitate removal of the boring tool 80.

With the system as described above, at the point that the workpiece processing is initiated, the otherwise exposed, rotating, portions of the boring tool 80 and spindle 124 are surrounded fully by the housing 92, the guide sleeve 116, and the quill/guide assembly sleeve 134. Thus, no rotating part is exposed to the operator through the housing 92, or upstream thereof. The shielding is maintained throughout the processing of the workpieces 86.

Because access is permitted to the accumulation space 94, mounting and removal of the boring tool 80 can be effected without requiring that the boring tool 80 be fully retracted from the housing 92. This makes possible a relatively compact configuration, in an axial direction, while facilitating manipulation of the boring tool 80.

While the workpiece boring system 70 has utility for a range of processing operations, it is particularly useful in deep hole drilling, generally defined as hole length to hole diameter ratios of ≥ 5:1, and more specifically a gundrilling environment in which holes are bored having depths significantly greater than their diameters. As just one example, the cutting depth of a particular boring tool may be on the order of 30 times the diameter thereof, up to, and potentially in excess of, 100 times the diameter.

The foregoing disclosure of specific embodiments is intended to be illustrative of the broad concepts comprehended by the invention.

## Claims

1. A system for boring a workpiece, said system comprising:
a spindle assembly for holding and rotating an elongate tool around a first axis to effect boring of a workpiece,
the spindle assembly comprising a spindle that is movable from a retracted position along the first axis to an extended position through an operating range,
the spindle assembly further comprising a guide assembly relative to which the spindle is guidingly rotatable; and
a chip box comprising a housing defining a collection space and comprising first and second walls spaced axially relative to the first axis,
the guide assembly and chip box being relatively movable along the first axis between first and second different relative positions with the guide assembly and chip box being closerwith respect to each other in the second relative position than in the first relative position,
the guide assembly guiding rotating movement of the spindle relative to the chip box with the guide assembly and chip box in the second relative position.

2. The system for boring a workpiece according to claim 1 wherein the guide assembly guides rotating movement of the spindle independently of the chip box.

3. The system for boring a workpiece according to claim 1 wherein with the guide assembly and chip box in the second relative position, the guide assembly engages the chip box.

4. The system for boring a workpiece according to claim 3 wherein the guide assembly comprises a cylindrical sleeve which extends around the first axis and telescopingly engages the chip box.

5. The system for boring a workpiece according to claim 1 wherein the guide assembly and chip box are relatively movable along the first axis into a third relative position wherein the guide assembly extends at least partially through the chip box.

6. The system for boring a workpiece according to claim 1 wherein the chip box comprises a cylindrical sleeve which is mounted at the first housing wall and which guides translatory movement of the guide assembly along the first axis.

7. The system for boring a workpiece according to claim 6 wherein the chip box further comprises a bushing at the second housing wall which is capable of guiding rotary movement of an elongate tool rotated by the spindle and directed through the second housing wall.

8. The system for boring a workpiece according to claim 1 wherein the housing comprises a first part and a second part that is selectively repositonable relative to the first part between an operating position and an access position.

9. The system for boring a workpiece according to claim 8 wherein the second part is guidingly pivotably movable between the operating and access positions.

10. The system for boring a workpiece according to claim 1 wherein the system has an axially downstream end at the second housing wall and an axially upstream end and with the guide assembly and chip box in the second relative position there is no rotating part of the spindle assembly or an elongate tool held by the spindle that is exposed upstream of the second housing wall.

11. The system for boring a workpiece according to claim 10 further comprising an elongate tool that is held by the spindle assembly.

12. The system for boring a workpiece according to claim 11 wherein the elongate tool has a cutting portion with a diameter and a length and the ratio of the length of the cutting portion to the diameter of the cutting portion is at least 30:1.

13. The system for boring a workpiece according to claim 1 wherein a part of the spindle projects axially beyond the guide assembly and with the guide assembly and chip box in the first relative position the part of the spindle can be accessed to selectively secure an elongate tool to the spindle and release an elongate tool from the spindle.

14. A method of boring a workpiece, said method comprising the steps of:
rotating a spindle so that an elongate tool held by the spindle is rotated around a first axis;
directing the elongate tool held by the spindle in a first direction along the first axis so that a free end of the elongate tool is directed through a housing on a chip box that defines a collection space and against a workpiece;
boring the workpiece with the free end of the elongate tool at the downstream end of the housing;
shielding the elongate tool from exposure to a user with the housing; and
shielding at least a portion of the spindle from exposure to a user upstream of the housing.

15. The method of boring a workpiece according to claim 14 wherein the step of shielding at least a portion of the spindle comprises shielding at least a portion of the spindle through a guide assembly that engages the housing.

16. The method of boring a workpiece according to claim 15 further comprising the step of guidingly moving the guide assembly relative to the housing.

17. The method of boring a workpiece according to claim 16 further comprising the steps of moving the guide assembly relative to the housing to a tool change position wherein a part of the spindle is exposed, and through the part of the spindle mounting an elongate tool in an operative position on the spindle or releasing an elongate tool from the operative position.

18. The method of boring a workpiece according to claim 17 wherein the step of mounting or releasing the elongate tool comprises directing the elongate tool to and from the part of the spindle by movement of the elongate tool through a collection space defined by the housing in a direction transverse to the first axis.

19. The method of boring a workpiece according to claim 18 wherein the housing has a first part and a second part that is selectively movable relative to the first part to expose the collection space to facilitate direction of the elongate tool to and from the part of the spindle.

20. The method of boring a workpiece according to claim 14 further comprising the step of forming a bore in the workpiece, which bore has a diameter and a depth that is at least 30 times the diameter of the bore.
